# EUROPÄISCHE PATENTANMELDUNG

(11) **EP 3 666 738 A1**
(43) Veröffentlichungstag der Anmeldung: **17.06.2020**
(21) Anmeldenummer: 19000533.0
(22) Anmeldetag: 26.11.2019
(51) Int. Cl.: C02F 11/06, F23C 10/22, F23G 7/00, F23G 5/30

(54) **VERFAHREN UND VORRICHTUNG ZUR DOSIERUNG VON KLÄRSCHLAMM ZUR VERBRENNUNG IN EINER WIRBELSCHICHTFEUERUNG**

(30) Priorität: 10.12.2018 CZ 20180688
(71) Anmelder: Vysoká Skola Bánská - Technická Univerzita Ostrava, 708 33 Ostrava Poruba (CZ)
(72) Erfinder: Cech, Bohumír, CZ-71100 Ostrava-Koblov (CZ); Dvorák, Pavel, CZ-72529 Ostrava 29 (CZ); Vávrová, Zuzana, CZ-71300 Ostrava-Hermanice (CZ); Fojtu, Radim, 73913 Kuncice pod Ondrejnikem 158 (CZ); Palicka, Ondrej, CZ-73562 Potstát (CZ)
(74) Vertreter: Markes, Libor

(57) **Zusammenfassung**

Ein Verfahren zur Dosierung von Klärschlamm zur Verbrennung in einer Wirbelschichtfeuerung besteht darin, dass in einen Fluss des entwässerten Klärschlamms unmittelbar vor dem Eintritt in eine Verbrennungskammer Druckluft zur Durchwirbelung und -lüftung des Klärschlamms senkrecht zu dem Klärschlammfluss zugeführt wird.

Einrichtung zur Durchführung des Verfahrens ist durch ein Klärschlammdosierrohr (1) gebildet, das an eine Klärschlammzuflussleitung (3) angeschlossen ist und in eine Verbrennungskammer mündet, wobei an der Zufuhr der Druckluft angeschlossene Öffnungen (8) in der Dosierrohrwand um deren Umfang herum unmittelbar vor der Dosierrohrohrmündung gebohrt sind.

## Beschreibung

Die Erfindung betrifft ein Verfahren zum Dosieren des eingedickten Schlamms aus Kläranlagen zur Verbrennung in Verbrennungsanlagen, insbesondere in Wirbelschichtfeuerungen, und weiterhin betrifft sie eine Vorrichtung zur Durchführung dieses Verfahrens. Die Erfindung fällt in das Gebiet der thermischen Verwertung von Klärschlamm und das der Wärmekraftanlagen.

Zum Zweck der Verbrennung wird der Klärschlamm in Kläranlagen entwässert. Dies erfolgt in Zentrifugen, Siebbandpressen u.a. Das Resultat dieses Verfahrens ist Dickschlamm mit einem Wasseranteil von 50 bis 90 Gew.-%, wobei ein Gemisch von organischen und anorganischen Stoffen den Rest bildet. Heizwert des Dickschlamms beträgt 1 bis 2 MJ.kg⁻¹, abhängig vom Wassergehalt. Der Klärschlamm aus Kläranlagen wurde früher auf Felder oder Deponien hinausgefahren. Im Einklang mit der geltenden Legislative soll gegenwärtig der entwässerte Klärschlamm in Energieanlagen verbrannt werden. Durch die Verbrennung werden Bakterien, Viren und Schimmelpilze beseitigt und unerwünschte organische Stoffe entsorgt.

Der Klärschlamm wird in Verbrennungsanlagen, insbesondere in solchen mit Wirbelschichtfeuerung, thermisch entsorgt. Der Schlamm wird dort mit einer Plungerpumpe durch eine Förderleitung aus einem Bunker in eine Verbrennungskammer befördert. Der Transportweg endet mit einem Rohr, das durch die Wand der Verbrennungskammer geht und direkt in die Wirbelschicht mündet. Aus diesem Dosierrohr mit Durchmesser von 50 bis 150 mm fallen kompakte Schlammklumpen von einem Gewicht von 1 bis 3 kg von einer Höhe von einigen Metern in den unteren Bereich der Wirbelschicht, eventuell bis auf das Festbett der Verbrennungskammer.

Als Beispiel kann die Einrichtung nach der CN 203703990 genannt werden, die zur Verbrennung von Klärschlamm in einer Sandwirbelschicht dient. Diese Einrichtung erfordert in Betrieb, die zu beförndernde Menge von Schlamm ständig zu überwachen, um Verstopfen der Luftzufuhr im Festbett vorzubeugen. Es besteht weiterhin die Gefahr, dass der Überschuss der nassen pastösen Masse das Wirbelschichtverfahren lahm legt. Es darf nur eine solche Menge Schlamm dosiert werden, bei der die Schlammmasse in der Feuerung zu kleinen wirbelnden Partikeln dispergiert ist. Als Folge einer unpassenden Dosierung von Schlamm werden die nichtverbrannten Partikeln zusammen mit der Asche aus der Feuerung abgeleitet, und außerdem können die Wände der Verbrennungskammer verkrustet werden, was Wärmeleitfähigkeit und Beständigkeit der Auskleidung beeinträchtigt.

Das Problem kann teilweise durch Einteilung des Transportwegs in mehrere Teilströme gelöst werden, die in verschiedene Stellen der Wirbelschichtfeuerung geführt werden.

Bei allen bekannten Einrichtungen dieser Art handelt es sich bei den Dosiereinrichtungen immer um gerade glatte Zufuhrröhre.

In der CN 204404196 wird eine Einrichtung zur Wirbelverbrennung von teilweise entwässertem Klärschlamm beschrieben. Der Schlamm wird hier in die Feuerung durch ein Rohr zugeführt, in dessen Mündung ein Drehzerstäuber angebracht ist. Das Zufuhrrohr ist von zwei koaxialen zylinderförmigen Mänteln umgeben. Diese Anordnung dient der Zufuhr der primären und sekundären Verbrennungsluft in die Feuerung. Es handelt sich im Grunde um einen Brenner, der zur Schlammverbrennung direkt vor der Zufuhrrohrmündung bestimmt ist.

Die DE 2612302 bezieht sich auf ein Verfahren und einen Ölbrenner zur Verbrennung organische Bestandteile enthaltender flüssiger Abwässer, wobei die Abwässer unter Druck in die Brennerflamme eingedüst werden. Die Abwässer werden noch vor Eintritt in den Brenner in einer Mischdüse mit Druckluft vermischt. Dabei ist die Strömungsgeschwindigkeit der Luft so eingestellt, dass das Abwasser den Brennermund in Form einer Tropfenwirbelschicht verlässt. Als Zerstäubungsmittel wird der dem Brenner-zugeführte Dampf verwendet. Diese Einrichtung ist nicht dazu bestimmt, Dickschlamm zur Verbrennung in Wirbelschichtfeuerungen zu dosieren. Eine Mischdüse verursacht eine bedeutende Verengung des Materialflusses, ist zum Verstopfen geneigt und kann die Vermischung des zähflüssigen Dickschlamms mit der Luft nicht garantieren.

Der Erfindung liegt die Aufgabe zugrunde, ein Verfahren und eine einfache und wirksame Einrichtung zur Zerstreuung des Klärschlamms in einer Wirbelschichtfeuerung zu schaffen.

Diese Aufgabe wird erfindungsgemäß durch das Verfahren und die Einrichtung mit Merkmalen des Einspruchs 1 bzw. 3 gelöst.

Das erfindungsgemäße Verfahren zur Dosierung von Klärschlamm zur Verbrennung in einer Wirbelschichtfeuerung besteht darin, dass in einen Fluss des entwässerten Klärschlamms unmittelbar vor dem Eintritt in die Verbrennungskammer Druckluft zur Durchlüftung und Durchwirbelung des Klärschlamms senkrecht zu dem Klärschlammfluss zugeführt wird.

Zu einer besseren Verteilung des Klärschlamms in der Verbrennungskammer kommt es, wenn der Druck der zugeführten Luft pulsiert.

Die erfindungsgemäße Einrichtung zur Durchführung des genannten Verfahrens ist durch ein Klärschlammdosierrohr gebildet, dass an eine Klärschlammzuflussleitung angeschlossen ist und in eine Verbrennungskammer mündet, wobei an die Zufuhr der Druckluft angeschlossenen Öffnungen in der Dosierrohrwand um deren Umfang herum unmittelbar vor der Dosierrohrmündung gebohrt sind.

Die Druckluftzufuhr kann vorteilhaft durch eine Lücke zwischen dem Dosierrohr und einem inneren zylinderförmigen Mantel gebildet sein, der das Dosierrohr umgibt.

Für die Abkühlung der Dosiereinrichtung ist der innere Mantel mit Vorzug mit einem äußeren Mantel umgeben, wobei eine die Kühlungsluft zuführende Lücke zwischen den beiden Mänteln in die Verbrennungskammer mündet.

In einer vorteilhaften Ausführung der Erfindung ist das Dosierrohr mit einem Anschluss für Reinigungsdruckluft ausgestattet und zwischen der Klärschlammzuflussleitung und dem Dosierrohr ist ein Verschlussventil eingeschaltet.

Das neue Dosierungsverfahren von pastösem Dickschlamm besteht in dessen Durchwirbelung und Durchlüftung mittels der Druckluft, die unmittelbar vor der Mündung der Schlammzuflussleitung in die Verbrennungskammer dem Schlammfluss zugeführt wird. Das Eindringen der wirbelnden Luft in den Schlammfluss hat eine Störung der homogenen pastösen Konsistenz des Schlamms zur Folge, sodass der Schlammfluss in kleinere Partikeln geteilt wird. Die Größe der Partikeln ist von der Menge und der Geschwindigkeit der aus den Öffnungen des Dosierrohrs strömenden Luft abhängig. Die auf diese Weise zugeführte kinetische Energie hat zur Folge, dass sich die Partikeln insofern in der Wirbelschichtfeuerung zerstreuen, dass sie das Festbett fast nicht berühren. Das Wasser verdampft dann schneller und die desintegrierten Partikeln brennen gut durch. Dieses Verfahren ist zur Dosierung des Schlamms in verschiede Teile der Wirbelschichtfeuerung geeignet: in die stationäre Wirbelschicht, in die Transportwege der heißen Asche und in weitere Stellen. Die Einrichtung ist nicht gegen fremde im Schlamm enthaltene Objekte empfindlich, weil sie keine Verengung des Transportwegs darstellt.

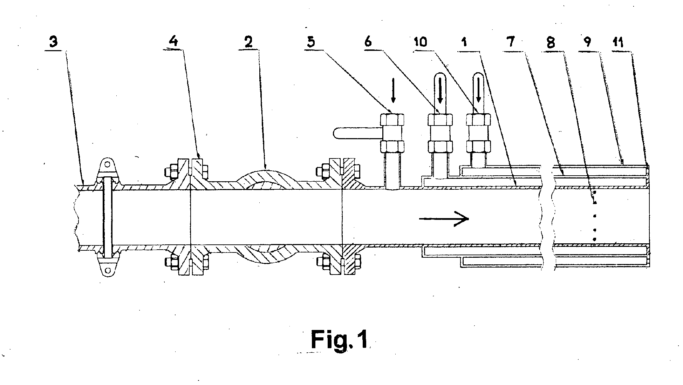

Die Erfindung wird anhand der Zeichnung und der Beispielsbeschreibung weiter erläutert, wobei Fig. 1 einen schematischen Längsschnitt durch die erfindungsgemäße Vorrichtung darstellt.

Die Vorrichtung zur Dosierung von Klärschlamm zur Verbrennung in einer Wirbelschichtfeuerung besteht aus einem Dosierrohr **1**, das durch ein Verschlussventil **2** von einer Schlammzufuhrleitung **3** getrennt ist, deren Durchmesser 50 bis 150 mm beträgt, abhängig von der Größe der Anlage. Das Dosierrohr ist mittels eines Flansches **4** an die Schlammzufuhrleitung **3** angeschlossen und sein freies Ende ist in eine Wand der Verbrennungskammer eingeschoben. Einschalten des Verschlussventils **2** ermöglicht Reparatur der Zufuhrleitung **3** oder Austausch des Dosierrohrs **1.** Zum Zweck der Reinigung des Dosierrohrinneren von Schlammablagerungen während des Stillstands oder der Reparatur der Anlage kann durch eine Luftzufuhr **5** Reinigungsluft von geeignetem Druck zugeführt werden.

Die Druckluft zur Durchwirbelung und Durchlüftung des Schlamms wird durch einen Eintritt **6** in die Lücke zwischen der äußeren Wand des Dosierrohrs **1** und dem das Dosierrohr **1** umgebenden inneren Mantel **7** zugeführt. Die Druckluft dringt in den Fluss der pastösen Schlammmasse in dem Dosierrohr **1** senkrecht zu seiner Richtung durch einige kleine Öffnungen **8** in der Wand des Dossierrohrs **1** ein, die sich unmittelbar vor dem Austritt des Schlamms aus dem Dosierrohr **1** in die Verbrennungskammer befinden. Die Öffnungen **8** sind um den Umfang herum des Dosierrohrs **1** in einer Ebene gebohrt und deren Durchmesser beträgt 1 bis 6 mm.

Um den thermischen Verschleiß der Vorrichtung zu vermindern, ist die beschriebene Vorrichtung mit einem äußeren Mantel **9** versehen, und in die Lücke zwischen den Mänteln **7, 9** wird durch eine Zufuhr **10** kalte Druckluft mit Überdruck von 5 bis 10 bar zugeführt. Beim Durchlauf zwischen den Mänteln **7, 9** kühlt diese Druckluft das Material des Dosierrohrs **1** ab und tritt dann durch Öffnungen **11** in die Verbrennungskammer, wo sie am Verbrennen des Brennstoffs und des Schlamms teilnimmt.

### Beispiel 1

Der Klärschlamm mit 28 Gew.-% Trockenmasse wurde mit einer doppelwirkenden Kolbenpumpe in eine Wirbelschichtfeuerung dossiert. Der Wirbelschichtkessel hat eine 52 MW-Leistung und verbrennt Braunkohle mit Klärschlamm. Der Schlamm wird in eine dichte Wirbelschicht dossiert, deren Höhe 4,5 m über dem Rost beträgt. Der Durchmesser der Zufuhrleitung ist 70 mm und die Mündung der Leitung in die Brennkammer ist mit dem erfindungsgemäßen Dosierrohr versehen. Der Klärschlamm wurde in den Mengen von 500 bis 550 kg pro Stunde dosiert. Luft mit dem Druck von 6 bar wurde zur Durchwirbelung und -lüftung des Schlamms zugeführt. Das Luftvolumen betrug 7 bis 70 Nm³/St., vorteilhaft 15 bis 25 Nm³/St. Zum Vergleich wurde die Vorrichtung mit und ohne Klärschlammdurchlüftung getestet. Beim Dosieren ohne Durchlüftung fällt der Schlamm locker auf eine Stelle und bildet einen Haufen auf dem Festbett. Nachdem die Druckluft eingeschaltet worden war, zerstreuten sich die Schlammpartikeln in einen Kreis, der jedoch nicht die Brennkammerwände berührte.

### Beispiel 2

Die Dosierung des Klärschlamms wurde unter denselben Bedingungen wie im Beispiel 1 durchgeführt, diesmal jedoch mit pulsierender Druckluft. Die Pulsation des Druckluftstroms wurde mittels eines Rotationsventils erzeugt. Es zeigte sich, dass der Schlamm bei pulsierender Druckluftzufuhr auf die ganze Fläche des Kreises gleichmäßiger zerstreut wird und der Durchmesser der Einfallfläche der Schlammpartikeln um 20 % größer ist. Die Größe der Schlammpartikeln ist geringer und deren Zerstreuung gleichmäßiger als bei der Dosierung ohne Pulsation.

Da die Legislative Verwendung des Klärschlamms in der Landwirtschaft limitiert und dessen Deponierung untersagt, wird der Schlamm vorwiegend verbrannt, vorzugsweise in Wirbelschichtfeuerungen. Das klebrige und pastöse Beschaffrenheit des Dickschlamms beeinträchtigt die Zerstreuung des Schlamms in der Wirbelschicht. Deswegen ist es notwendig, den Schlamm in kleineren Partikeln zu dosieren. Das ermöglicht die erfindungsgemäße Einrichtung, die besonders für Wirbelschichtfeuerungen geeignet ist, in den Kohle, Gas oder Öl verbrannt werden.

## Patentansprüche

1. Verfahren zur Dosierung von Klärschlamm zur Verbrennung in einer Wirbelschichtfeuerung, **dadurch gekennzeichet,** dass in einen Fluss des entwässerten Klärschlamms unmittelbar vor dem Eintritt in eine Verbrennungskammer Druckluft zur Durchwirbelung und -lüftung des Klärschlamms senkrecht zu dem Klärschlammfluss zugeführt wird.

2. Verfahren nach Anspruch 1, **dadurch gekennzeichnet, dass** der Druck der zugeführten Luft pulsiert.

3. Einrichtung zur Durchführung des Verfahrens nach Anspruch 1 oder 2, **dadurch gekennzeichnet, dass** sie durch ein Klärschlammdosierrohr (1) gebildet ist, das an eine Klärschlammzuflussleitung (3) angeschlossen ist und in eine Verbrennungskammer mündet, wobei an eine Zufuhr der Druckluft angeschlossene Öffnungen (8) in der Dosierrohrwand um deren Umfang herum unmittelbar vor der Dosierrohrohrmündung gebohrt sind.

4. Einrichtung nach Anspruch 3, **dadurch gekennzeichnet, dass** die Druckluftzufuhr durch eine Lücke zwischen dem Dosierrohr (1) und einem inneren zylinderförmigen Mantel (7) gebildet ist, der das Dosierrohr (1) umgibt.

5. Einrichtung nach Anspruch 3 oder 4, **dadurch gekennzeichnet, dass** der innere Mantel (7) mit einem äußeren Mantel (9) umgeben ist, wobei die Kühlungsluft führende Lücke zwischen den beiden Mänteln (7, 9) in die Verbrennungskammer mündet.

6. Einrichtung nach einem der Ansprüche 3 bis 5, **dadurch gekennzeichnet, dass** das Dosierrohr (1) mit einem Anschluss (5) für Reinigungsdruckluft ausgestattet ist und zwischen der Zuflussleitung (3) und dem Dosierrohr (1) ein Verschlussventil (2) eingeschaltet ist.
